# EUROPEAN PATENT APPLICATION

(11) **EP 4 757 036 A1**
(43) Date of publication of application: **10.06.2026**
(21) Application number: 24952172.5
(22) Date of filing: 11.09.2024
(51) Int. Cl.: H01M 50/264, H01M 50/244

(54) **BATTERY MODULE AND TELEMATICS TERMINAL HAVING SAME**

(71) Applicant: LG Electronics Inc., Seoul 07336 (KR)
(72) Inventor: JEON, Jongwook, Seoul 06772 (KR); HONG, Minwoo, Seoul 06772 (KR); PARK, Choyoung, Seoul 06772 (KR)
(74) Representative: Vossius & Partner Patentanwälte Rechtsanwälte mbB
(86) International application number: PCT/KR2024/013835
(87) International publication number: WO 2026/058978

(57) **Abstract**

A battery module according to the present embodiment comprises a housing having a battery space formed between an upper case and a lower case; a plurality of latches extending from the housing; a connecting portion connected to the plurality of latches; and a strap connected to the connecting portion, the battery module can be easily mounted by the plurality of latches, and the strap can assist in the withdrawal of the battery module.

## Description

### [Technical Field]

The present invention relates to a battery module and a telematics terminal comprising the battery module.

### [Background Art]

Telematics refers to the combination of wireless communication and GPS Global Positioning System technology to provide various mobile communication services in a vehicle, such as location information, safe driving, entertainment, financial services, reservations, and product purchases.

A telematics terminal can be installed in a vehicle. Korean Patent No. 10-0669609 B1 published, January 15, 2007 discloses a telematics terminal connected to a vehicle power supply, and the telematics terminal can be operated by power supplied from the vehicle power supply.

### [Disclosure]

### [Technical Problem]

The present embodiment provides a battery module that can be more firmly maintained in a telematics terminal and easily detached from the telematics terminal.

The present embodiment provides a telematics terminal having a battery module that eliminates the need for a battery module cover, thereby facilitating the service of the battery module and having a simple structure.

### [Technical Solution]

A telematics terminal having a battery module according to the present embodiment may comprise a battery module; a telematics control unit TCU housing provided with a pocket which the battery module is detachably mounted, and an inner space formed in the TCU housing; and a substrate accommodated in the inner space.

The battery module according to the present embodiment comprises a housing having a battery space formed between an upper case and a lower case; a plurality of latches extending from the housing; a connecting portion connected to the plurality of latches; and a strap connected to the connecting portion.

The housing is snap-fit connected to a TCU housing to which the latches are secured, and
The housing is separated from the TCU housing using the strap.

A strap penetration hole through which the strap passes may be formed in the upper case

The strap may be capable of applying force in a plurality of directions.

An upper open area of the strap penetration hole may be larger than a lower open area of the strap penetration hole.

A terminal mounting portion may be formed in the housing.

The battery module may comprise a power supply terminal disposed in the terminal mounting portion.

The housing may further comprise a guide spaced apart from the terminal mounting portion and inserted into a position alignment hole formed in the TCU housing.

The latch may comprise an elastic body extending from the housing and a protruding body protruding from the elastic body.

The protruding body may comprise a center body and a pair of side bodies,

An upper end of the center body may be perpendicular to a rear surface of the elastic body,

An upper end of the side body may be at an obtuse angle with the rear surface of the elastic body.

A latch hole which a protruding body of the latch is inserted and secured may be formed in the housing.

The strap may comprise a fixed region fixed to the lower case; a connection region surrounding the connection portion; and a free end region extending from the connection region.

When the free end region is lifted, the latch may be released from the latch hole.

A through portion through which the terminal mounting portion passes may be formed in the pocket.

### [Advantageous Effect]

According to the present embodiment, since the housing is snap-fitted and secured to the TCU housing, the battery module can be easily installed in the TCU housing, since a battery module cover is not required to cover the battery module, the number of components in the telematics terminal can be minimized.

Furthermore, since the housing is separated from the TCU housing using a strap, the battery module can be easily removed from the TCU housing.

Furthermore, the lower and upper cases can be easily pulled out of the TCU housing by simply pulling the strap.

Furthermore, since the strap can exert force in a plurality of directions, the latch can more easily be removed from the latch hole in the TCU housing.

Furthermore, the upper end of the center body of the latch is perpendicular to the back surface of the elastic body, allowing the latch to be firmly assembled into the pocket when the battery module is installed.

Furthermore, since the top of the side body of the latch has an obtuse angle with the rear surface of the elastic body, the latch can easily come out of the latch hole when the battery module is pulled out.

### [Description of Drawings]

Fig. 1 is a block diagram schematically illustrating the internal configuration of a telematics terminal according to the present embodiment,
Fig. 2 is a block diagram illustrating the configuration related to power control of a telematics terminal according to the present embodiment,
Fig. 3 is a perspective view illustrating a battery module according to the present embodiment,
Fig. 4 is a plan view illustrating a battery module according to the present embodiment,
Fig. 5 is a rear view illustrating a battery module according to the present embodiment,
Fig. 6 is a bottom view illustrating a battery module according to the present embodiment,
Fig. 7 is a perspective view illustrating a telematics terminal having a battery module according to the present embodiment,
Fig. 8 is a cross-sectional view taken along line A-A of Fig. 7,
Fig. 9 is a view illustrating the front plate portion of a pocket according to the present embodiment,
Fig. 10 is a view illustrating the back plate portion of a pocket according to the present embodiment,
Fig. 11 is a cross-sectional view illustrating a latch according to the present embodiment being engaged in a pocket,
Fig. 12 is a cross-sectional view illustrating a process of removing a battery module from the TCU housing according to the present embodiment.

### [Best Mode]

Hereinafter, specific embodiments of the present disclosure will be described in detail with reference to the drawings.

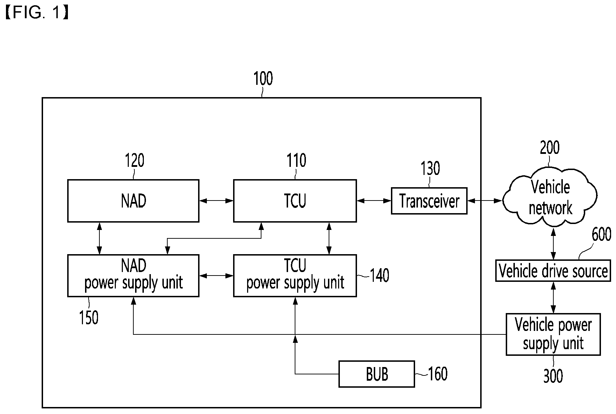

Fig. 1 is a block diagram schematically illustrating the internal configuration of a telematics terminal 100 according to the present embodiment.

According to Fig. 1, the telematics terminal 100 is configured to include a telematics control unit (hereinafter referred to as "TCU") 110, a network access unit (hereinafter referred to as "NAD" 120), a transceiver 130,
a telematics control power supply unit (hereinafter referred to as "TCU power supply unit") 140, and a network access power supply unit (hereinafter referred to as "NAD power supply unit") 150.

The TCU 110 may serve as the main control unit host processor of the telematics terminal 100.

The TCU 110 may comprise a keypad connector, an audio codec connector, an EEPROM (Electrically Erasable Programmable Read-Only Memory) connector, a UART (Universal Asynchronous Receiver/Transmitter) connector, an NAD connector, a transceiver connector, an SDRAM (Synchronous Dynamic Random Access Memory) connector, a test tool interface connector, and the like.

The TCU 110 may be connected to the NAD 120, the transceiver 130, the TCU power supply unit 140, and the NAD power supply unit 150 through the connectors, and may perform vehicle network communication, etc.

The TCU 110 may process communication data to provide telematics services.

The NAD 120 may assist the TCU 110 in processing communication data. The NAD 120 may be equipped with a UART connection terminal, a Tx (transmission) terminal, an Rx (reception) terminal, and a PCM (Pulse Code Modulation) connection terminal.

The TCU power supply unit 140 and the NAD power supply unit 150 may each be connected to the vehicle power supply unit 300.

The TCU power supply unit 140 may enable or disable power to the TCU 110.

The NAD power supply unit 150 may enable or disable power to the NAD 120.

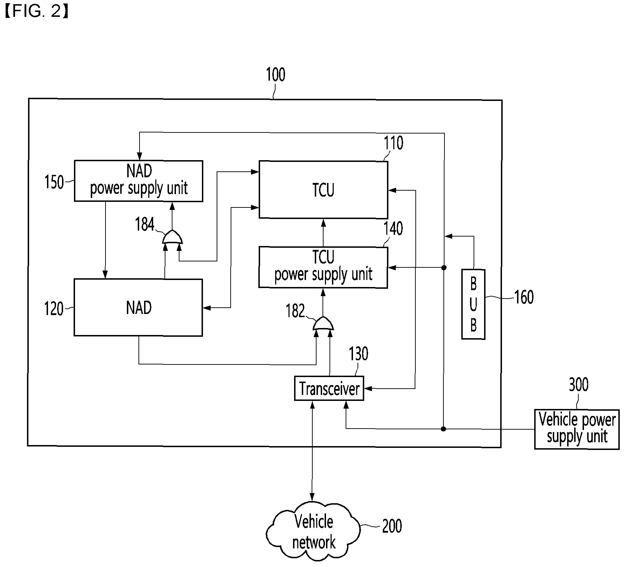

Fig. 2 is a block diagram illustrating a configuration related to power control of a telematics terminal 100 according to the present embodiment.

According to FIG. 2, the vehicle power supply unit 300 is connected to the transceiver 130, the TCU power supply unit 140, and the NAD power supply unit 150, and can provide 12V battery power.

The TCU power supply unit 140 and the NAD power supply unit 150 are connected to the TCU 110 and the NAD 120, respectively, to control power, and the TCU 110 can be connected to the transceiver 130 and the NAD 120.

The telematics terminal 100 may constitute a power control circuit comprising two OR gates 182, 184.

The transceiver 130 and the NAD 120 can be connected to the input terminal of the first OR gate 182, and the output terminal of the first OR gate 182 can be connected to the TCU power supply unit 140.

Additionally, the TCU 110 and NAD 120 may be connected to the input terminal of the second OR gate 184, and the output terminal of the second OR gate 184 may be connected to the NAD power supply unit 150.

The transceiver 130 may be connected to the vehicle network 200 and receives messages from various vehicle devices or interface devices and transmits them to the TCU 110.

The vehicle network 200 may be connected to a vehicle drive source 300, such as an engine or motor, to detect ignition on/off signals or abnormal signals.

The vehicle network 200 may use Class 2, HSGMLAN, or LSGMLAN, and thus the transceiver 130 may also be equipped with a Class 2 transceiver, an HSGMLAN transceiver, or an LSGMLAN transceiver, respectively.

The transceiver 130 converts vehicle network input signals into Tx transmitting end and Rx receiving end data and transmits them to the TCU 110. When a power cut signal is received from the TCU 110, the transceiver disables the TCU power supply unit 140 so that only the NAD 120 can be switched to DRx mode.

The telematics terminal 100 may comprise a board and a TCU housing.

The board may comprise a TCU 110, a TCU power supply unit 140, and an NAD power supply unit 150, and the NAD 120 may be disposed above the TCU 110.

The TCU housing forms the exterior of the telematics terminal 100 and protects various components, such as the board.

The telematics terminal 100 may further comprise a Back UP Battery (BUB) 160.

The BUB 160 can supply power to the telematics terminal 100 in an emergency, such as when power is not supplied from the vehicle power supply unit 300.

The BUB 160 may be a battery module comprising at least one battery and may be detachably mounted to the TCU housing.

Hereinafter, the BUB 160 will be referred to as the battery module 160.

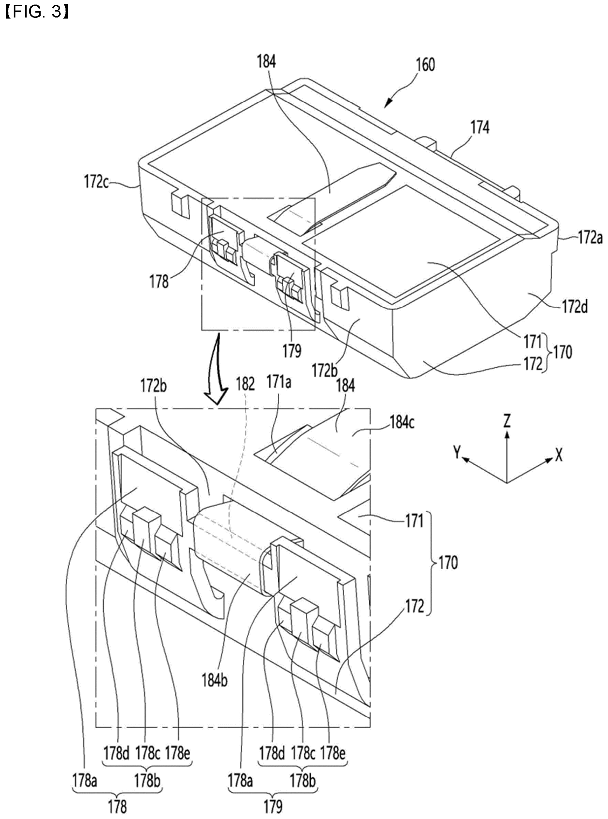

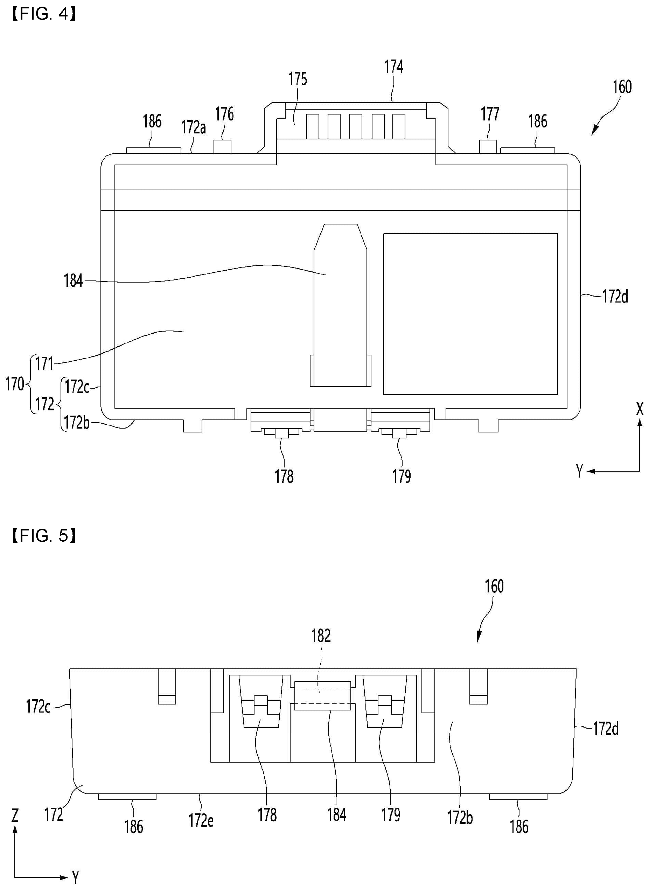

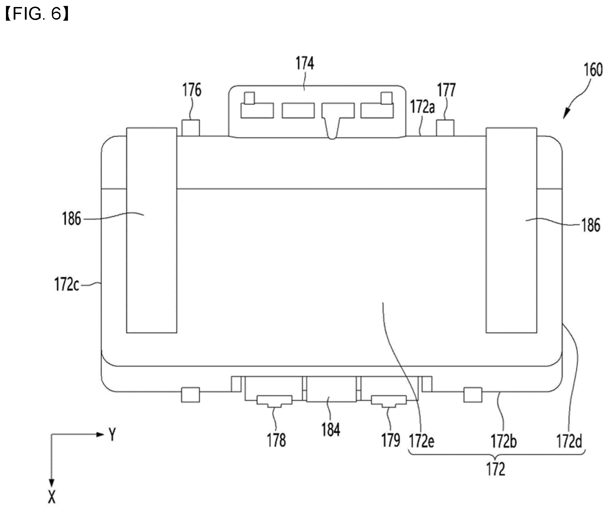

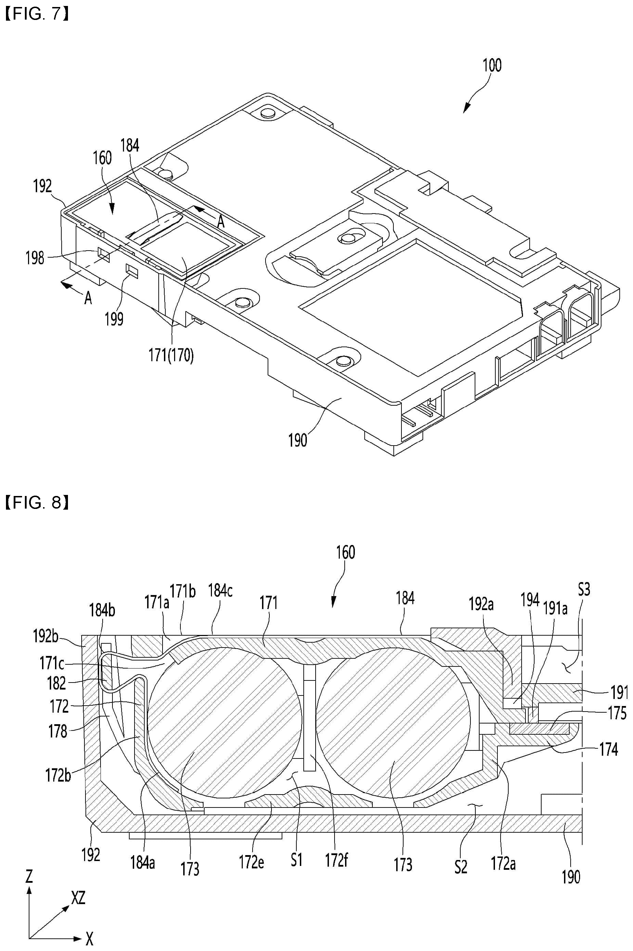

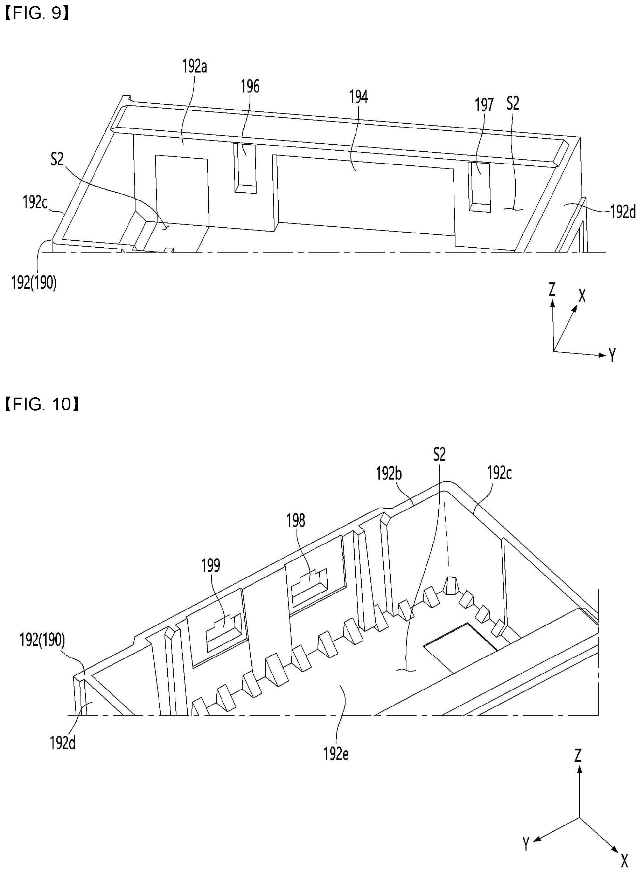

FIG. 3 is a perspective view illustrating a battery module according to the present embodiment, FIG. 4 is a plan view illustrating a battery module according to the present embodiment, FIG. 5 is a rear view illustrating a battery module according to the present embodiment, FIG. 6 is a bottom view illustrating a battery module according to the present embodiment, Fig. 7 is a perspective view illustrating a telematics terminal having a battery module according to the present embodiment, FIG. 8 is a cross-sectional view taken along line A-A of FIG. 7, FIG. 9 is a view illustrating a front plate portion of a pocket according to the present embodiment, and FIG. 10 is a view illustrating a rear plate portion of a pocket according to the present embodiment.

The battery module 160 may comprise a housing 170.

A battery space S1 containing a battery 173 may be formed within the housing 170.

The housing 170 may comprise an upper case 171 and a lower case 172.

The battery space S1 may be formed between the upper case 171 and the lower case 172.

The upper case 171 may be disposed above the lower case 172. The upper case 171 may cover the battery space S1 formed within the lower case 172. The upper case 171 may be a battery cover that protects the battery 173.

The upper case 171 may be detachably connected to the lower case 172, rotatably connected to the lower case 172, or slidably connected to the lower case 172, and may open and close the battery space S1.

The lower case 172 may be formed in an approximately rectangular parallelepiped shape, and the battery space S1 may be formed inside the lower case 172.

The lower case 172 may comprise a front plate 172a, a rear plate 172b spaced apart from the front plate 172a in the front-rear direction X, a left plate 172c connecting the left end of the front plate 172a and the left end of the rear plate 172b, and a right plate 172d connecting the right end of the front plate 172a and the right end of the rear plate 172b. The lower case 172 may further comprise a lower plate 172e forming the bottom surface of the lower case 172.

The front plate 172a, the rear plate 172b, the left plate 172c, the right plate 172d, and the lower plate 172e may form a battery space S1.

The lower case 172 may comprise a partition plate 172f spaced apart from each of the front plate 172a and the rear plate 172b. The partition plate 172f may extend in the left-right direction Y within the battery space S1.

The battery space S1 may be divided into a front space and a rear space by the partition plate 172a.

A plurality of batteries 173 may be accommodated in the battery space S1. The plurality of batteries may comprise a front battery accommodated in the front space and a rear battery accommodated in the rear space.

A terminal mounting portion 174 may be formed in the housing 170. The terminal mounting portion 174 may protrude forward from the front plate 172a of the lower case 172.

The battery module 160 may further comprise a power supply unit terminal 175. The power supply unit terminal 175 may be disposed in the terminal mounting portion 174. The power supply unit terminal 175 may be fixed to the terminal mounting portion 174.

The power supply unit terminal 175 may be in electrical contact with a substrate 191 disposed inside the TCU housing 190.

When the battery module 160 is completely mounted in the TCU housing 190, the power supply unit terminal 175 may be electrically connected to the substrate 191 and may supply power to the substrate 191.

The housing 170 may further comprise a guide. The guide may be inserted into the TCU housing 190. The guide may be inserted into a position alignment hole formed in the TCU housing 190 and may guide the mounting of the battery module 160.

The guide may protrude forward from the front plate 172a of the lower case 172. The guide may be spaced apart from the terminal mounting portion 174.

A plurality of guides may be formed on the lower case 172. The plurality of guides 176, 177 may comprise a pair of guides 176, 177 spaced apart in the left-right direction Y. The pair of guides 176, 177 may comprise a left guide 176 and a right guide 177.

The housing 170 may be provided with a latch that may be secured to the TCU housing 190.

The latch may be formed on the opposite side of the guide 176, 177 of the housing 170.

The latch may be formed on the upper case 171 or the lower case 172.

Hereinafter, the latch is described as being formed on the rear plate 172b of the lower case 172, but this is not limited thereto, and it is of course also possible for the latch to be formed on the upper case 171.

A plurality of latches may be formed on the housing 170. The plurality of latches 178, 179 may extend from the housing 170. The plurality of latches 178, 179 may comprise a pair of latches 178, 179. The pair of latches 178, 179 may be spaced apart in the left-right direction Y. A pair of latches 178, 179 may comprise a left latch 178 and a right latch 179.

The left latch 178 and the right latch 179 may be formed in the same shape.

The latch may comprise an elastic body 178a extending from the housing 170 and a protruding body 178b protruding from the elastic body 178a.

The elastic body 178a may protrude from the rear surface of the housing 170.

The lower end of the elastic body 178a may be connected to the rear surface of the housing 170, and the upper end of the elastic body 178a may be spaced apart from the rear surface of the housing 170.

The elastic body 178a may be connected to the rear plate 172b of the lower case 172.

The lower end of the elastic body 178a may be connected to the rear plate 172b of the lower case 172, and the upper end of the elastic body 178a may be spaced apart from the rear plate 172b of the lower case 172.

The protruding body 178b may protrude from the elastic body 178a. The protruding body 178b may protrude from the rear surface of the elastic body 178a.

The protruding body 178b may be inserted into a latch hole formed in the TCU housing 190, and when inserted into the latch hole, may be restrained around the latch hole.

The protruding body 178b may comprise a center body 178c and side bodies.

A plurality of side bodies may be formed on the elastic body 178a. The plurality of side bodies 178d, 178e may comprise a pair of side bodies 178d, 178e formed on an elastic body 178a. The pair of side bodies 178d, 178e may be spaced apart in the left-right direction Y. The pair of side bodies 178d, 178e may comprise a left body 178d formed on the left side of the center body 178c and a right body 178e formed on the right side of the center body 178c.

The housing 170 may be coupled to the TCU housing 190 by a plurality of latches 178, 179. The housing 170 may be snap-fit coupled to the TCU housing 190 to which the latches 178, 179 are restrained.

The housing 170 may further comprise a connecting portion 182 connected to a plurality of latches 178, 179.

The connecting portion 182 may be disposed between the left latch 178 and the right latch 179. The connecting portion 182 may be connected to each of the left latch 178 and the right latch 179. The left end of the connecting portion 182 may be connected to the right end of the left latch 178, and the right end of the connecting portion 182 may be connected to the left end of the right latch 179.

An example of the connecting portion 182 may be a bar connecting the left latch 178 and the right latch 179, which are spaced apart in the left-right direction Y.

The connecting portion 182 may be spaced apart from the upper case 171.

The battery module 160 may comprise a strap 184 connected to the housing 170. The strap 184 may be connected to a connecting portion 182 of the housing 170. The strap 184 may be fitted to the housing 170 by the connecting portion 182. The strap 184 may be fitted to the connecting portion 170 by a portion of the strap 184 being wrapped around the connecting portion 182. A portion of the strap 184 may wrap all or a portion of the connecting portion 182 and be fitted to the housing 170.

The housing 170 may be easily separated from the TCU housing 190 using the strap 184.

The strap 184 may comprise a fixed region 184a, a connecting region 184b, and a free end region 184c.

The fixed region 184a may be fixed to the lower case 172. The fixed region 184a may be accommodated in the battery space S1. The fixed region 184a may be fixed to the lower case 172 using an adhesive or the like.

The connection region 184b may extend from the upper end of the fixed region 184a. The connection region 184b may surround the connection portion 182. The connection region 184b may pass through a gap formed in the housing and surround the connection portion 182.

The gap formed in the housing 170 may be formed between the upper case 171 and the lower case 172, in the upper case 171, or in the lower case 172.

The free end region 184c may extend from the connection portion 184b.

The free end region 184c may extend from the inside of the housing 170 to the upper surface of the upper case 171.

When the free end region 184c of the strap 184 is lifted, the housing 170 may be lifted upward at the portion where the strap 184 is fitted i.e., the connection portion 182, and the latches 178, 179 may be pulled out of the latch holes 198 199 formed in the TCU housing 190 and may be released from the TCU housing 190.

When the free end region 184c of the strap 184 is lifted in the upward or upward forward oblique direction XZ, the housing 170 may be lifted along with the connection portion 182 to which the strap 184 is connected.

A strap 184 inserted into the connecting portion 182 may penetrate the upper case 171.

A strap penetration hole 171a through which the strap 184 passes may be formed in the upper case 171.

A free end region 184c of the strap 184 may penetrate the strap penetration hole 171a.

The strap 184 may penetrate the strap penetration hole 171a and may be subject to force in a plurality of directions.

The open area of the upper end 171b of the strap penetration hole 171a may be wider than the open area of the lower end 171c of the strap penetration hole 171a.

The strap 184 may be pulled in the forward-upward oblique direction XZ or upward direction by an operator or an operating device, and the strap 184 may pull the connecting portion 182 in the oblique direction XZ or upward direction.

When the connecting portion 182 is pulled in the oblique direction XZ or upward direction, the plurality of latches 178, 179 connected to the connecting portion 182 may be pulled by being attracted by the connecting portion 182, and the rear plate 172d of the housing 170 on which the plurality of latches 178, 179 are formed may be lifted upward.

The battery module 160 may further comprise a cushion 186.

The cushion 186 may be attached to the outer surface of the housing 160.

The cushion 186 may be attached to the bottom and front surfaces of the lower case 172. The cushion 186 may contact the TCU housing 190 and protect the battery module 160 from shock and vibration.

The TCU housing 190 may have an inner space S3 formed therein to accommodate a substrate 191.

The substrate 191 may be accommodated in the inner space S3. When the battery module 160 is assembled, the substrate 191 may be electrically connected to the battery module 160, particularly to the power supply unit terminal 175.

A connector 191a that contacts the power supply unit terminal 175 may be arranged on the substrate 191. The connector 191a may be arranged on the bottom surface of the substrate 191.

The TCU housing 190 may have a pocket 192. The top surface of the pocket 192 may be open.

The battery module 160 may be inserted into the pocket 192 and accommodated in the pocket 192.

A battery module space S2 into which the battery module 160 is inserted and accommodated may be formed inside the pocket 192.

The pocket 192 may comprise a front plate portion 192a, a rear plate portion 192b spaced apart from the front plate portion 192a in the front-rear direction X, a left plate portion 192c connecting the left end of the front plate portion 192a and the left end of the rear plate portion 192b, and a right plate portion 192d connecting the right end of the front plate portion 192a and the right end of the rear plate portion 192b. The pocket 192 may further comprise a lower plate portion 192e forming the bottom exterior of the pocket 192.

The front plate portion 192a, the rear plate portion 192b, the left plate portion 192c, the right plate portion 192d, and the lower plate portion 192e may form a battery module space S2.

A through-hole 194 may be formed in the TCU housing 190 through which a terminal mounting portion 174 may pass.

The through-hole 194 may be formed in a pocket 192 of the TCU housing 190.

The through-hole 194 may be formed to be open in the front-rear direction X of the pocket 192. The through-hole 194 may be formed in the front plate portion 192a of the pocket 192.

A position alignment hole may be formed in the TCU housing 190 for positional alignment of the battery module 160. A position alignment hole may be formed in a pocket 192 of a TCU housing 190. The position alignment hole may be formed to be open in the front plate portion 192a of the pocket 192 in the front direction X. A plurality of position alignment holes may be formed in the front plate portion 192a of the pocket 192. The plurality of position alignment holes 196, 197 may comprise a pair of position alignment holes 196, 197 spaced apart in the left-right direction Y. The pair of position alignment holes 196, 197 may comprise a left position alignment hole 196 and a right position alignment hole 197.

A latch hole may be formed in the TCU housing 190 into which a protruding body 178b of a plurality of latches 178, 179 is inserted and restrained. A latch hole may be formed in a pocket 192 of a TCU housing 190. The latch hole may be formed in a rear plate portion 192b of the pocket 192 to be open in the front-rear direction X. A plurality of latch holes may be formed in the rear plate portion 192b of the pocket 192.

The plurality of latch holes 198, 199 may comprise a pair of latch holes 198, 199 spaced apart in the left-right direction Y. The pair of latch holes 198, 199 may comprise a left latch hole 198 and a right latch hole 199.

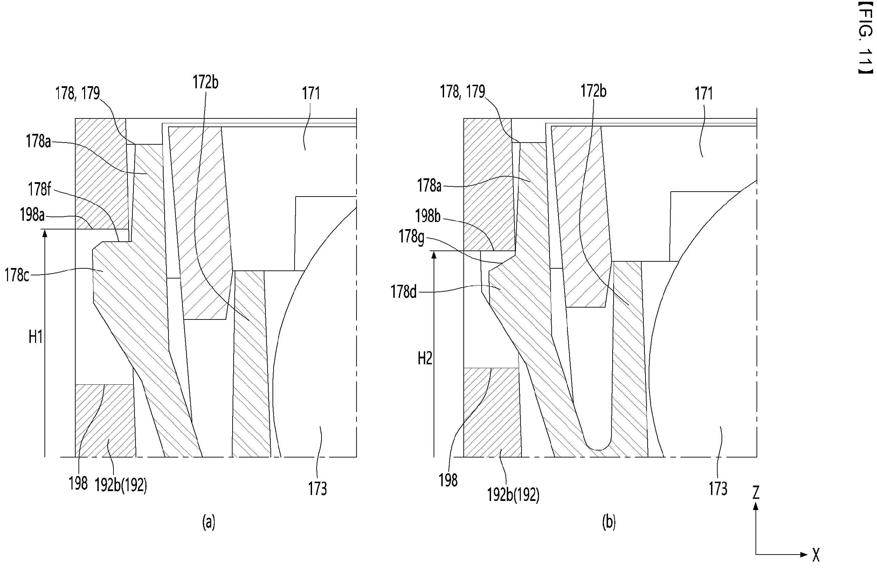

Fig. 11 is a cross-sectional view of a latch according to the present embodiment, which is secured to a pocket.

Fig. 11 a is a cross-sectional view illustrating a center body inserted into a latch hole, and Fig. 11 b is a cross-sectional view illustrating a side body inserted into a latch hole.

The upper end 178f of the center body 178c may be horizontal. The upper end 178f of the center body 178c may be parallel to the upper end 198a of the latch hole 198 where the center body 178c is inserted.

The rear surface of the elastic body 178a may be vertical.

The upper end 178f of the center body 178c may be perpendicular to the rear surface of the elastic body 178a.

The center body 178c may be inserted into the latch hole 198 and firmly secured to the pocket 192, minimizing the risk of arbitrarily removing the latches 178, 179.

The upper end 178g of the side body 178d may be inclined. The upper end of the side body 178d may face the inclined direction toward the upper rear surface.

The upper end 178g of the side body 178d may not be perpendicular to the back surface of the elastic body 178a, and may have an obtuse angle of inclination with the back surface of the elastic body 178a.

The upper end 178g of the side body 178d may have an acute angle of inclination with the upper end 198b of the area in which the side body 178d is inserted among the latch holes 198.

The upper end 178g of the side body 178d may have an acute angle of inclination with the upper end 198b of the area in which the side body 178d is inserted of the latch holes 198.

The height of the upper end 178g of the side body 178d may be different from the height of the upper end 178f of the center body 178c.

The upper end 198a of the area where the center body 178c is inserted in the latch hole 198 may be formed with the upper end 198b of the area where the side body 178d is inserted in the latch hole 198 in a single step.

The upper height H2 of the area 198b where the side body 178d is inserted in the latch hole 198 may be lower than the upper height H1 of the area 198a where the center body 178c is inserted in the latch hole 198.

The upper end 178g of the side body 178d may smoothly pass over the upper end of the latch hole 198 formed in the pocket 192. When the connecting portion 182 is raised by the strap 184, the side body 178d can easily be pulled out of the latch hole 198 199. That is, an operator or an operating device can pull the battery module 160 out of the TCU housing 190 with little force.

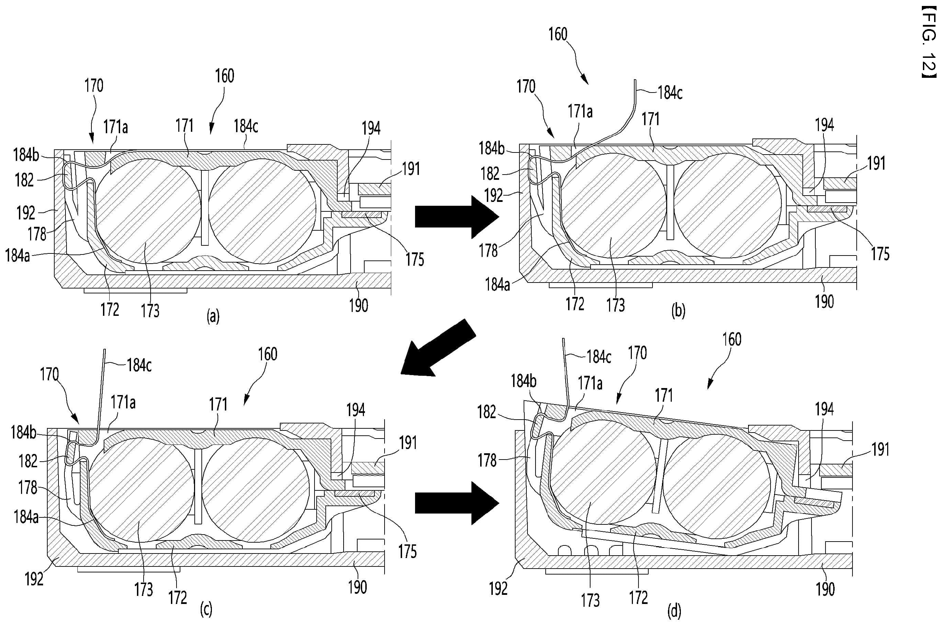

Fig. 12 is a cross-sectional view illustrating a process of removing a battery module from the TCU housing according to the present embodiment.

Fig. 12 a is a cross-sectional view showing the battery module assembled into the TCU housing, with the free end area 184c of the strap 184 secured to the upper surface of the housing 170.

Fig. 12 b is a cross-sectional view showing a portion of the free end area 184c of the strap 184 tilted.

Fig. 12 c is a cross-sectional view showing a portion of the free end area 184c of the strap 184 tilted more vertically than in Fig. 12 b.

Fig. 12 d is a cross-sectional view showing the strap 184 being lifted upward and the battery module 160 being separated from the pocket 192.

The operator or operating device can grasp the free end area 184c of the strap 184 illustrated in FIG. 12 a, and then raise it obliquely, as illustrated in FIG. 12 b, and then raise it approximately vertically, as illustrated in FIG. 12 c.

The operator or operating device can grasp the free end area 184c of the strap 184 illustrated in FIG. 12 c, and raise the connecting portion 182 into which the connecting area 184b of the strap 184 is fitted, as illustrated in d of FIG. 12, and the housing 160 can be gradually removed from the pocket 192 while being disposed obliquely with respect to the pocket 192.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but are for illustrative purposes, and the scope of the technical idea of the present disclosure is not limited by these embodiments.

The scope of protection of the present disclosure should be interpreted in accordance with the claims below, and all technical ideas within the equivalent scope should be interpreted as being comprised in the scope of rights of the present disclosure.

## Claims

1. A battery module comprising:
a housing having a battery space formed between an upper case and a lower case;
a plurality of latches extending from the housing;
a connecting portion connected to the plurality of latches; and
a strap connected to the connecting portion.

2. The battery module of claim 1,
wherein the housing is snap-fit connected to a TCU housing to which the latches are secured, and
the housing is separated from the TCU housing using the strap.

3. The battery module of claim 1,
wherein a strap penetration hole through which the strap passes is formed in the upper case, and
the strap is capable of applying force in a plurality of directions.

4. The battery module of claim 3,
wherein an upper open area of the strap penetration hole is larger than a lower open area of the strap penetration hole.

5. The battery module of claim 1.
wherein a terminal mounting portion formed in the housing, and
the battery module comprise a power supply terminal disposed in the terminal mounting portion.

6. The battery module of claim 5, wherein the housing further comprises a guide spaced apart from the terminal mounting portion and inserted into a position alignment hole formed in the TCU housing.

7. The battery module of claim 1, wherein the latch comprises an elastic body extending from the housing and a protruding body protruding from the elastic body.

8. The battery module of claim 1, wherein the protruding body comprises a center body and a pair of side bodies,
an upper end of the center body is perpendicular to a rear surface of the elastic body, and
an upper end of the side body is at an obtuse angle with the rear surface of the elastic body.

9. A telematics terminal having a battery module comprising;
a battery module;
a TCU housing provided with a pocket which the battery module is detachably mounted, and an inner space formed in the TCU housing; and
a substrate accommodated in the inner space,
the battery module comprises:
a housing having a battery space formed between an upper case and a lower case;
a plurality of latches extending from the housing;
a connecting portion connected to the plurality of latches; and
a strap connected to the connecting portion.

10. The telematics terminal having a battery module of claim 9,
wherein a latch hole which a protruding body of the latch is inserted and secured is formed in the housing; and
the strap comprises:
a fixed region fixed to the lower case;
a connection region surrounding the connection portion; and
a free end region extending from the connection region, and
when the free end region is lifted, the latch is released from the latch hole.

11. The telematics terminal having a battery module of claim 9,
wherein a strap penetration hole through which the strap passes is formed in the upper case, and
an upper open area of the strap penetration hole is larger than a lower open area of the strap penetration hole.

12. The telematics terminal having a battery module of claim 9,
wherein a terminal mounting portion protrudes from the housing,
the battery module further comprises a power supply terminal disposed in the terminal mounting portion, and
a through portion through which the terminal mounting portion passes is formed in the pocket.

13. The telematics terminal having a battery module of claim 12,
wherein a guide spaced apart from the terminal mounting portion protrudes from the lower case, and
a position alignment hole into which the guide is inserted is formed in the pocket.

14. The telematics terminal having a battery module of claim 9,
wherein the latch comprises:
an elastic body extending from the housing; and
a protruding body protruding from the elastic body.

15. The telematics terminal having a battery module of claim 14,
wherein the protruding body comprises a center body and a pair of side bodies,
an upper end of the center body is perpendicular to a rear surface of the elastic body, and
an upper end of the side body is at an obtuse angle with the rear surface of the elastic body.
